(19) 

**Europäisches Patentamt**
**European Patent Office**
**Office européen des brevets**

(11) **EP 4 001 448 A1**

(12) **EUROPEAN PATENT APPLICATION**
published in accordance with Art. 153(4) EPC

(43) Date of publication:
**25.05.2022 Bulletin 2022/21**

(21) Application number: **20859469.7**

(22) Date of filing: **26.08.2020**

(51) International Patent Classification (IPC):
**C22C 38/00** (2006.01)   **C21D 8/12** (2006.01)

(52) Cooperative Patent Classification (CPC):
**C21D 8/12; C22C 38/00; C22C 38/02; C22C 38/04; C22C 38/06**

(86) International application number:
**PCT/CN2020/111403**

(87) International publication number:
**WO 2021/037062 (04.03.2021 Gazette 2021/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.08.2019 CN 201910791165**

(71) Applicant: **BAOSHAN IRON & STEEL CO., LTD.**
**Shanghai 201900 (CN)**

(72) Inventors:
 • **CHU, Shuangjie**
  **Shanghai 201900 (CN)**

 • **LI, Guobao**
  **Shanghai 201900 (CN)**
 • **ZHANG, Feng**
  **Shanghai 201900 (CN)**
 • **WANG, Zhicheng**
  **Shanghai 201900 (CN)**
 • **SHEN, Kanyi**
  **Shanghai 201900 (CN)**
 • **LIU, Baojun**
  **Shanghai 201900 (CN)**

(74) Representative: **Maiwald Patent- und Rechtsanwaltsgesellschaft mbH**
**Elisenhof**
**Elisenstraße 3**
**80335 München (DE)**

(54) **NON-ORIENTED ELECTRICAL STEEL PLATE AND MANUFACTURING METHOD THEREFOR**

(57) The present invention discloses a non-oriented electrical steel plate, comprising the following chemical elements in percentage by mass: 0<C≤0.003%; Si: 1.6-3.4%; Mn: 0.1-1.2%; S≤0.003%; Al: 0.1-3.0%; Sn: 0.005-0.2%; Ca: 0.0005-0.01%; O≤0.003%; N≤0.003%; and the balance being Fe and inevitable impurities. In addition, the present invention further discloses a manufacturing method for the above non-oriented electrical steel plate, including the steps of: smelting and casting; hot rolling; intermediate annealing; cold rolling; continuous annealing; and applying an insulation coating to obtain a finished non-oriented electrical steel plate. The non-oriented electrical steel plate is excellent in magnetic property.

Fig. 1

**Description**

**Technical field**

The present invention relates to a steel plate and a manufacturing method thereof, specifically to a non-oriented electrical steel plate and a manufacturing method thereof.

**Background**

In recent years, with gradually drying up of resources such as petroleum and coal, people's demands for clean energy such as wind power, tidal power and solar power become more and more urgent. On one hand, people try everything possible to convert these physical and photo-thermal power into accessible electric power resources to replace traditional petroleum and coal resources as much as possible; on the other hand, people also pay more attention to improve the efficiency and energy saving in the aspect of daily power source consumed. For example, as for the increasing widely used electric vehicle nowadays, its driving motor gradually develops in the direction of miniaturization, precision and high efficiency. Accordingly, it requires that the corresponding non-oriented electrical steel plate should have characteristics of high magnetic induction, low iron loss and high strength, and more importantly, thin gauge of generally 0.1-0.3 mm as thin gauge can greatly reduce high-frequency iron loss of finished strip steel. However, it brings a deficiency that the magnetic induction would also be synchronously deteriorated and further reducing mechanical strength, bringing new problem to subsequent production, machining and use of the steel plate.

In order to relieve the contradiction among thickness reduction, high mechanical performance and excellent electromagnetic property, Japanese patent with the publication number of JPH11-61257, publication date March 5, 1999, and titled as "Non-oriented Electrical Steel Plate with Low Iron Loss and Low Magnetic Anisotropy and Manufacturing Method Thereof' discloses an electrical steel plate and a manufacturing method thereof. In the technical solution disclosed by the patent, a continuous casting billet is subjected to low-temperature heating treatment within a range of 950-1150°C, then the intermediate billet is subjected to heat holding treatment after hot rolling and rough rolling, requiring that the temperature drop before finish rolling is controlled within 40°C, a finish rolling temperature limiting to Ar1 phase transformation point of +20°C or more, and a coiling temperature limited to 640-750°C. Through the controlled conditions and the method, the non-oriented electrical steel plate with low magnetic anisotropy can be obtained.

Chinese patent with the publication number of CN1326009A, publication date December 12, 2001, and titled as "Non-oriented Electrical Steel Sheet with Excellent Machining Performance and Low iron Loss and Manufacturing Method Thereof' discloses a non-oriented electrical steel plate with excellent machining performance and low iron loss. In the technical solution disclosed by the patent, the weight percentage of Si+Mn+Al in the steel is limited to about 5%, and 0.0005% or more of Mg treatment, or (and) Ca, or (and) REM treatment is adopted in the smelting process for removing nonmetallic inclusions in the steel, under the condition that the total weight of the three components does not exceed 0.02%. In order to improve such kind of control effect, in the RH refining process, it requires to adopt Al element to perform deep deoxidization on molten steel, while the S content in the steel needs to be limited within 0.01%. The target thickness of the hot-rolled strip steel is 2.3 mm. Cold-rolling production can be performed by adopting primary cold rolling or adopting secondary cold rolling along with intermediate annealing, and then performing final annealing to the cold-rolled strip steel at a temperature of 700-1100°C.

Chinese patent with the publication number of CN101821418A, publication date September 1, 2010, and titled as "Non-oriented Electromagnetic Steel Plate having Low High-frequency Iron Loss and Manufacturing Method Thereof' discloses a non-oriented electromagnetic steel plate having low high-frequency iron loss. In the technical solution disclosed by the patent, it requires that the overall steel plate contains the following elements in percentage by mass: C: 0.005% or less, Si: 2.0%-4.0%, Mn: 1% or less, and Al: 0.1%-8.0%, and the balance of Fe and inevitable impurities, and it further requires that the Al content in the thickness direction of the plate satisfies the following formula: 0.1< (Xs-Xc) <100. In order to improve the electromagnetic property of the finished strip steel, at least one of 5% or less of Cu, 1% or less of Nb, 1% or less of Ti, 5% or less of Ni, and 15% or less of Cr, as well as at least one of 0.5% or less of Mo, W, Sn, Mg, Ce, etc. are further needed in the steel. After hot rolling, vapor deposition or hot dipping is adopted to coat Al-containing coating onto the surface of the hot-rolled strip steel, then cold rolling is performed to a thickness of 0.1-0.3 mm; and finally, performing final annealing for 1 hour or more under 1000°C or below.

**Summary of the invention**

One objective of the present invention is to provide a thin-gauge non-oriented electrical steel plate, and the thin-gauge non-oriented electrical steel plate has excellent magnetic property.

In order to achieve the above objective, the present invention provides a thin-gauge non-oriented electrical steel plate comprising the following chemical elements in percentage by mass:

0<C≤0.003%; Si: 1.6-3.4%; Mn: 0.1-1.2%; S≤0.003%; Al: 0.1-3.0%; Sn: 0.005-0.2%; Ca: 0.0005-0.01%; O≤0.003%; N≤0.003%; and the balance of Fe and other inevitable impurities.

In the thin-gauge non-oriented electrical steel plate described in the present invention, the design principle of each chemical element is described below:

C: in the thin-gauge non-oriented electrical steel plate according to the present invention, C would strongly hinder grain growth of a finished steel plate, and tends to compound with Nb, V, Ti or the like to form fine precipitates, thereby causing loss increase and generating magnetic aging. Therefore, in the thin-gauge non-oriented electrical steel plate according to the present invention, the mass percentage of C is controlled to be 0<C≤0.003%.

Si: in the thin-gauge non-oriented electrical steel plate according to the present invention, Si would improve resistivity of the materials, and can effectively reduce iron loss of the steel. However, if the mass percentage of Si is higher than 3.4%, magnetic induction of the steel would be reduced significantly, which leads to significant reduction of rollability of cold rolling; if the mass percentage of Si is lower than 1.6%, the effect of reducing iron loss would not be achieved. On this basis, in the thin-gauge non-oriented electrical steel plate according to the present invention, the mass percentage of Si is controlled to be 1.6-3.4%.

Mn: in the thin-gauge non-oriented electrical steel plate according to the present invention, Mn would compound with S to produce MnS, thereby reducing deterioration of magnetic properties. However, when the mass percentage of Mn is lower than 0.1%, the sulfur retention effect would be poor, when the mass percentage of Mn is higher than 1.2% or more, the recrystallization effect of the steel would be inhibited. On this basis, in the thin-gauge non-oriented electrical steel plate according to the present invention, the mass percentage of Mn is controlled to be 0.1-1.2%.

S: in the thin-gauge non-oriented electrical steel plate according to the present invention, if the mass percentage of S exceeds 0.003 %, the quantity of harmful inclusions such as MnS and $Cu_2S$ would be greatly increased, which would strongly hinder the grain growth and deteriorate magnetism of the steel. On this basis, in the thin-gauge non-oriented electrical steel plate according to the present invention, the mass percentage of S is controlled to be ≤0.003%.

Al: in the thin-gauge non-oriented electrical steel plate according to the present invention, Al can improve the resistivity of materials and effectively reduce the iron loss of the steel. However, if the mass percentage of Al is higher than 3.0%, the magnetic induction of the steel would be reduced significantly, which leads to significant reduction of rollability of cold rolling; if the mass percentage of Al is lower than 0.1%, the effect of reducing iron loss would not be achieved. On this basis, in the thin-gauge non-oriented electrical steel plate according to the present invention, the mass percentage of Al is controlled to be 0.1-3.0%.

Sn: in the thin-gauge non-oriented electrical steel plate according to the present invention, if the mass percentage of Sn is lower than 0.005%, effects of improving the texture of the steel and improving the magnetic induction of the steel would not be achieved, if the mass percentage of Sn is higher than 0.2%, it would cause grain refinement and deteriorate the magnetism of the steel. On this basis, in the thin-gauge non-oriented electrical steel plate according to the present invention, the mass percentage of Sn is controlled to be 0.005-0.2%.

Ca: in the thin-gauge non-oriented electrical steel plate according to the present invention, if the mass percentage of Ca is lower than 0.0005%, effects of removing oxide and sulfide inclusions would not be achieved, if the mass percentage of Ca is higher than 0.01%, grain refinement would easily occur and leads to reduction of rollability of cold rolling. On this basis, in the thin-gauge non-oriented electrical steel plate according to the present invention, the mass percentage of Ca is controlled to be 0.0005-0.01%.

O: in the thin-gauge non-oriented electrical steel plate according to the present invention, if the mass percentage of O is higher than 0.003%, the quantity of the oxide inclusions would be greatly increased, which leads to grain refinement which deteriorate magnetism of the steel. On this basis, in the thin-gauge non-oriented electrical steel plate according to the present invention, the mass percentage of O is controlled to be O≤0.003%.

N: in the thin-gauge non-oriented electrical steel plate according to the present invention, if the mass percentage of N exceeds 0.003%, precipitates such as Nb, V, Ti and Al of N would be greatly increased, which would strongly hinder the grain growth and deteriorate the magnetism of the steel. On this basis, in the thin-gauge non-oriented electrical steel plate according to the present invention, the mass percentage of N is controlled to be N≤0.003%.

Preferably, in the thin-gauge non-oriented electrical steel plate according to the present invention, the chemical elements further satisfy: 33×O/16+S/32≤12×Ca/40.

In the above solution, in consideration that the higher the cleanliness of steel, the easier the growth of the grains of the finished steel plate would be, which leads to higher proportion of favorable {100} surface texture. Therefore, by controlling the mass percentage of the chemical elements to satisfy: 33×O/16+S/32≤12×Ca/40, sufficient precipitation or advanced precipitation of the harmful inclusions can be achieved, thereby reducing the damage from the harmful inclusions. Moreover, the large size of the oxide and sulfide inclusions in the steel formed in the early period which mostly belong to deoxidizing products are prone to floating upwards. However, the size of the oxide inclusions produced by secondary deoxidation are small and difficult to be removed by floatation. Further, such kind of oxides has selectivity with respect to the precipitation of the subsequent sulfide inclusions due to different sulfur capacities. Typically, it is believed that oxides of Al would inhibit precipitation of the sulfide inclusions and delay the precipitation time, causing size reduction and quantity increase of the sulfide inclusions, which would further deteriorate the electromagnetic property of the finished steel plate. In order to redeem this kind of problem, calcium treatment can be adopted by combing oxides of Ca with the oxides of Al to form $12CaO \cdot 7Al_2O_3$ having low melting point and relatively large size to facilitate floatation removal, and in this way, a relationship between Ca, O and S needs to be determined. In addition, under the condition of not performing the calcium treatment, the sulfide inclusions would be mainly MnS and $Cu_2S$ and the size would gradually become smaller and the quantity would increase gradually, which leads to gradually increase of the damage. In contrast, after adopting the calcium treatment, because affinity between Ca and S is much closer than the affinity between Mn, Cu with S, CaS having large size and high melting point would be finitely produced and can be easily removed through flotation of itself, or CaS would collide and segregate together with the oxide inclusions having large size mentioned above and finally be removed through flotation. In order to achieve such kind of effect, it should be ensured that the oxide and sulfide inclusions will sufficiently compound with Ca. Therefore, preferably, each chemical element should be controlled to satisfy: 33×O/16+S/32≤12×Ca/40.

Preferably, the thin-gauge non-oriented electrical steel plate according to the present invention further contains at least one of Nb, V or Ti element, and satisfy the following in percentage by mass:

$$Nb/93+V/51+Ti/48 \leq C/12+N/14;$$

and

$$Nb+V+Ti \leq 0.01\%.$$

In the above solution, in consideration that the harmful inclusions are mainly formed by C, S, O and N elements in the non-oriented electrical steel plate, wherein C and N elements are mainly compounded with Nb, V and Ti elements, and the formed optimized inclusions are mainly TiC, TiN, Ti(CN), NbC, NbN, Nb(CN), VC, VN, and V(CN) and such kind of inclusions are low in melting point and low in precipitation temperature and would easily occur solid dissolving and precipitation repeatedly during continuous casting, hot rolling, and subsequent intermediate annealing and continuous annealing processes, the inclusions would have small size and large quantity and are prone to forming wedge domains and high pinning effect to the grain, which would greatly harm the magnetic induction and iron loss of the finished steel plate. As Nb, V and Ti are all trace residual elements having wide source and are difficult to remove, the feasible method is to consciously adjust their content proportion during smelting process to ensure that the formed harmful inclusions thereof are sufficiently precipitated and precipitated in advance. In this way, sufficient growth of the inclusions can be facilitated, reducing the harm caused by the inclusions as much as possible. The saturated components reaching precipitation conditions after calculation according to thermodynamics for forming steady state inclusions is required to be Nb/93+V/51+Ti/48≤C/12+N/14. Therefore, the relationship should be controlled to Nb/93+V/51+Ti/48≤C/12+N/14, wherein Nb+V+Ti≤0.01%, so as to reduce the damage of the inclusions to the finished steel plate and improve the magnetic property of the finished steel plate.

Preferably, in the thin-gauge non-oriented electrical steel plate according to the present invention, the thickness is 0.1-0.3 mm.

In the above solution, by adjusting the thickness of the hot-rolled steel plate to be, for example, 0.8-2.0 mm thereby obtaining a suitable reduction ratio of cold rolling at, for example, 75%-90%, the crystal recovery can be effectively inhibited in the subsequent continuous annealing process. Moreover, residual stored energy of deformation before recrystallization would be increased and resulting in the increase of nucleation driving force, which reduces the intensity of components of <111>//ND recrystallization texture, thereby facilitating improvement and enhancement of the electromagnetic property, and finally obtain the thin-gauge non-oriented electrical steel plate.

It should be noted that by reducing the thickness of the hot-rolled steel plate, on one hand, the overall temperature of the hot-rolled steel plate in the hot rolling process can be increased, and the temperature difference between the center and the upper-lower surfaces of the hot-rolled steel plate can be reduced, promoting sufficient recrystallization and grain growth of the hot-rolled steel plate, thereby increasing proportions of favorable {100} surface texture and {110} surface texture; on the other hand, after the reduction of the cold-rolling reduction ratio, the dislocation quantity in the cold-rolled steel plate is reduced, which would not generate large amount of lattice distortion and would keep the stored energy low. Therefore, in the subsequent continuous annealing process, the crystal recovery can be effectively inhibited, and can increase the residual stored energy of deformation before recrystallization, thus the nucleation driving force is increased and reducing the intensity of the components of the <111>//ND recrystallization texture, thereby facilitating improvement and enhancement of the electromagnetic property. Here, the measurement method of the surface texture is measurement based on metal material quantitative pole figure (YB/T 5360-2006) and adopts a SmartLab X-ray diffractometer for measuring.

Preferably, in the thin-gauge non-oriented electrical steel plate according to the present invention, the proportion of the {100} surface texture is not lower than 15%.

Preferably, in the thin-gauge non-oriented electrical steel plate according to the present invention, the iron loss $P_{10/400}$ is ≤12 W/kg, and the magnetic induction $B_{50}$ is ≥1.68 T. Here, the measurement method of the electromagnetic property is based on Epstein square method (GB 10129-1988) by adopting Germany Brockhaus magnetic measurement equipment, wherein $P_{15/50}$ represents an iron loss measured under condition of 1.0T and 400Hz, and $B_{50}$ represents a magnetic induction measured under condition of 5000 A/m.

Correspondingly, another objective of the present invention is to provide a manufacturing method of thin-gauge non-oriented electrical steel plate, and the thin-gauge non-oriented electrical steel plate with excellent magnetic property can be obtained through the manufacturing method.

In order to achieve the above objective, the present invention provides a manufacturing method of the above thin-gauge non-oriented electrical steel plate, including the steps of:

> smelting and casting;
> hot rolling;
> intermediate annealing: rapidly heating the hot-rolled steel plate to $T_{holding\ Temp.}$ at a first rate of 50-2000°C/s and holding for 1-180 s, wherein $T_{holding\ Temp.} = T_{Curie-Temp.} + 100\ k/v$, wherein v is the first rate and k is recrystallization effectiveness index of the hot-rolled steel plate ranging from 100-450°C$^2$/s;
> cold rolling;
> continuous annealing: heating the cold-rolled steel plate from rapid heating initial temperature $T_{initial}$ to crystallization ending temperature $T_{crystallization-ending}$ at second rate, wherein $T_{initial}$ is the starting temperature of heating at the second rate, and then further heating the cold-rolled steel plate to soaking temperature $T_{soaking}$ for soaking and holding, wherein the second rate is 100-5000°C/s; and
> applying an insulation coating to obtain a finished non-oriented electrical steel plate.

In the manufacturing method according to the present invention, in order to achieve reduction of equipment investment, improvement of production efficiency and reduction of energy medium consumption, the present invention does not set normalizing treatment between hot rolling and cold rolling, but utilizes an intermediate annealing process to perform rapid and short-time heating as well as heat holding treatment on the hot-rolled steel plate, and the heating method may adopt, for example, ohmic heating or electromagnetic induction heating. When heating is performed at the first rate, the higher the heating rate is, the more favorable to inhibiting growth of harmful {111} surface texture and promoting morphology control of equiaxial crystal ratio, and the more favorable to electromagnetic property of the finished steel plate. However, if the heating rate is too high, the requirements for equipment performance and investment would also become high. Therefore, in some preferred embodiments, the first rate can be controlled to be 50-400°C/s. Furthermore, in the technical solution according to the present invention, the holding time of the first rate may be controlled to be 1-180 s, preferably 5-30 s, which has been greatly reduced comparing to the existing normalizing soaking time. Meanwhile, the holding temperature is controlled at: $T_{holding\ Temp.} = T_{Curie-Temp.} + 100\ k/v$, wherein v is the first rate and k is the recrystallization effectiveness index of the hot-rolled steel plate assigned depending on the design of the chemical component in the steel and the first rate. For example, Example A8 comprises the following chemical elements in the steel plate in percentage by mass: 0.0022% of C, 1.67% of Si, 1.2% of Mn, 0.0012% of S, 1.52% of Al, 0.2% of Sn, 0.0008% of O, 0.003% of N, 0.0017% of Nb, 0.0006% of V, 0.0008% of Ti, and 0.0063% of Ca, and has a first rate of 400°C/s and a k value of 450 s; Example A12 comprises the following chemical elements in the steel plate in percentage by mass: 0.0011% of C, 2.98% of Si, 0.55% of Mn, 0.0008% of S, 0.94% of Al, 0.14% of Sn, 0.001% of O, 0.0015% of N, 0.0015% of Nb, 0.0021% of V, 0.0014% of Ti, and 0.0075% of Ca, and has a first rate of 300°C/s and a k value of 300 s. Typically, the higher the contents of the chemical components Si, Mn, and Al and the larger the first rate, the larger the k value would be, wherein k is ranged from 100-450°C$^2$/s.

Whereas in the subsequent continuous annealing process, ohmic heating or electromagnetic induction heating may also be adopted for heating. Heating is performed from the rapid heating initial temperature $T_{initial}$ to the crystallization

ending temperature $T_{crystallization-ending}$ so as to further control release of the stored energy and proportion of different kinds of surface textures in the cold-rolled steel plate. The rapid heating process lasts until recrystallization of the cold-rolled steel plate ends, because at this time, nucleation would be sufficient and contains no fibrous structure. Then, a conventional heating rate (for example, a heating rate of 1-30°C/s), or a rapid heating (for example, a heating rate of 100-5000°C/s) is further adopted to heat the cold-rolled steel plate into $T_{soaking}$ to perform soaking and holding, resulting in sufficient growth of the grain size, thereby obtaining excellent magnetic property. Here, whether to adopt rapid heating annealing is mainly considered from the viewpoint of manufacturing cost. Although it is helpful to the production efficiency and the electromagnetic property, it is not a restrictive requirement. The second rate is 100-5000°C/s, preferably can be controlled to be 100-600°C/s, this is because: if the second rate is too slow, release of the stored energy of deformation during cold rolling would be fast, which is detrimental to controlling of the subsequent favorable structure; or if the second rate is too high, it would result in high requirement for the equipment performance and high cost, and further prolongs the holding time of the cold-rolled steel plate at high temperature stage, which leads to poor uniformity of the grain structure.

Preferably, in the manufacturing method according to the present invention, the first rate in the intermediate annealing step is 50-400°C/s.

Preferably, in the manufacturing method according to the present invention, the second rate in the continuous annealing step is 100-600°C/s.

Preferably, in the manufacturing method according to the present invention, in the continuous annealing step, the rapid heating initial temperature $T_{initial}$ is a temperature between room temperature to Curie temperature. If the rapid heating initial temperature $T_{initial}$ is higher than the Curie temperature, it is detrimental to obtaining the favorable texture, and reducing generation of harmful texture.

Preferably, in the manufacturing method according to the present invention, in the continuous annealing step, the cold-rolled steel plate is further heated to a soaking temperature $T_{soaking}$ at a rate of 1-30°C/s.

Preferably, in the manufacturing method according to the present invention, $T_{soaking} = T_{crystallization-ending} + (50-130)$ °C. If the soaking temperature is too low, the size of the grain after finished crystallization would not grow sufficiently; and if the soaking temperature is too high, it is detrimental to obtaining the favorable texture, which also increases the manufacturing cost.

Preferably, in the manufacturing method according to the present invention, the thickness of the steel plate after the hot rolling step is 0.8-2.0 mm.

Preferably, in the manufacturing method according to the present invention, in the cold rolling step, primary cold rolling is adopted to roll the steel plate into a finished product thickness to reduce production burden and the manufacturing cost.

Compared with the prior art, the thin-gauge non-oriented electrical steel plate and the manufacturing method thereof according to the present invention have the following advantages and beneficial effects:

the thin-gauge non-oriented electrical steel plate according to the present invention has the characteristic of excellent magnetic property with an iron loss $P_{10/400}$ of $\leq 12$ W/kg, and a magnetic induction $B_{50}$ of $\geq 1.68$ T.

In addition, the manufacturing method according to the present invention also has the above advantages and beneficial effects.

**Brief description of the drawings**

Fig. 1 is a schematic curve diagram of different annealing process adopting the present technical solution and prior art, respectively.

Fig. 2 is a scanning electron microscope (SEM) image of the thin-gauge non-oriented electrical steel plate of Example A9.

Fig. 3 is a scanning electron microscope (SEM) image of the conventional steel plate of Comparative example A2.

Fig. 4 schematically shows influence of different cold rolling reduction ratios on magnetic induction.

Fig. 5 schematically shows influence of different mass percentages of Ca on iron loss.

Fig. 6 is a texture figure of the thin-gauge non-oriented electrical steel plate of Example A15.

Fig. 7 is a texture figure of the conventional steel plate of a Comparative example A3.

**DETAILED DESCRIPTION**

The thin-gauge non-oriented electrical steel plate and manufacturing method thereof will be further explained and illustrated below with reference to the drawings of the specification and the specific Examples. However, the explanation and illustration do not constitute improper limitation to the technical solution of the present invention.

**Examples A8-A17 and Comparative examples A1-A7**

The thin-gauge non-oriented electrical steel plate of Examples A8-A17 and the conventional steel plate of Comparative examples A1-A7 are manufactured by adopting the following steps:

(1) Mixing molten iron and scrap steel according to the chemical component proportion as shown in table 1, then after performing converter smelting and performing decarburization, deoxidation and alloying through RH refining, subjecting the molten steel to continuous casting to obtain a continuous casting billet.

(2) Hot rolling: controlling the thickness of the steel plate after subjected to hot rolling to be 0.8-2.0 mm.

(3) Intermediate annealing: rapid heating the hot-rolled steel plate to $T_{holding\ Temp.}$ at a first rate of 50-2000°C/s and holding for 1-180 s, wherein $T_{holding\ Temp.} = T_{Curie-Temp.} + 100\ k/v$, wherein v is the first rate and k is the recrystallization effectiveness index of the hot-rolled steel plate ranging from 100-450°$C^2$/s.

(4) Cold rolling: adopting primary cold rolling to roll the steel plate into a finished product thickness of 0.1-0.3 mm.

(5) Continuous annealing: rapid heating the cold-rolled steel plate from rapid heating initial temperature $T_{initial}$ to crystallization ending temperature $T_{crystallization-ending}$ at second rate; then the cold-rolled steel plate is further heated to soaking temperature $T_{soaking}$ for soaking and holding, wherein the second rate is 100-5000°C/s, and the rapid heating initial temperature $T_{initial}$ is a temperature between room temperature and Curie temperature, $T_{soaking} = T_{crystallization-ending} + (50-130)$°C.

(6) Applying an insulation coating to obtain a finished non-oriented electrical steel plate.

Table 1 lists the mass percentage proportion of all chemical elements of the thin-gauge non-oriented electrical steel plate of Examples A8-A18 and the conventional steel plate of the Comparative samples A1-A7.

Table 1. wt% the balance of Fe and other inevitable impurities)

| No. | c | Si | Mn | s | Al | Sn | O | N | Nb | V | Ti | Ca | A | B | c | Remark |
|---|---|---|---|---|---|---|---|---|---|---|---|---|---|---|---|---|
| A1 | 0.0011 | *1.42* | 0.57 | *0.0038* | 2.81 | / | 0.0012 | 0.0008 | 0.0047 | 0.0032 | 0.0035 | 0.0022 | *Unsatisfied* | *Unsatisfied* | *Unsatisfied* | Comparative example |
| A2 | 0.0007 | 3.27 | 0.27 | 0.0022 | *0.001* | 0.01 | 0.0015 | 0.0011 | 0.0018 | 0.0019 | 0.0022 | *0.0003* | Satisfied | *Unsatisfied* | Satisfied | Comparative example |
| A3 | 0.0024 | 2.24 | 0.58 | 0.0013 | 1.59 | 0.15 | 0.0013 | 0.0009 | 0.0008 | 0.0014 | 0.0001 | 0.0032 | Satisfied | *Unsatisfied* | Satisfied | Comparative example |
| A4 | 0.0006 | *3.94* | 0.33 | 0.0009 | *0.003* | *0.003* | 0.0007 | 0.0006 | 0.0011 | 0.0026 | 0.0018 | *0.015* | *Unsatisfied* | Satisfied | Satisfied | Comparative example |
| A5 | 0.0018 | 2.5 | 1.18 | 0.0025 | 1.18 | 0.05 | 0.0018 | 0.0024 | 0.0028 | 0.0008 | 0.0008 | 0.0047 | Satisfied | *Unsatisfied* | Satisfied | Comparative example |
| A6 | 0.0021 | 1.84 | 1.49 | 0.0018 | 0.85 | 0.08 | 0.0025 | 0.0017 | 0.0022 | 0.0011 | 0.0017 | 0.0088 | Satisfied | *Unsatisfied* | Satisfied | Comparative example |
| A7 | 0.0007 | 3.25 | 0.21 | 0.0005 | 0.23 | 0.11 | 0.0017 | 0.0005 | 0.0015 | 0.0008 | 0.0032 | 0.0018 | *Unsatisfied* | *Unsatisfied* | Satisfied | Comparative example |
| A8 | 0.0022 | 1.67 | 1.2 | 0.0012 | 1.52 | 0.2 | 0.0008 | 0.003 | 0.0017 | 0.0006 | 0.0008 | 0.0063 | Satisfied | Satisfied | Satisfied | Example |
| A9 | 0.0027 | 1.95 | 0.97 | 0.0011 | 0.99 | 0.06 | 0.0012 | 0.0011 | 0.0028 | 0.0011 | 0.0001 | 0.0091 | Satisfied | Satisfied | Satisfied | Example |
| A10 | 0.0014 | 2.39 | 0.94 | 0.0008 | 2.16 | 0.005 | 0.0006 | 0.0008 | 0.0024 | 0.0021 | 0.0009 | 0.0057 | Satisfied | Satisfied | Satisfied | Example |
| A11 | 0.0025 | 1.89 | 0.82 | 0.0001 | 3 | 0.19 | 0.0001 | 0.0011 | 0.0013 | 0.0024 | 0.0017 | 0.001 | Satisfied | Satisfied | Satisfied | Example |
| A12 | 0.0011 | 2.98 | 0.55 | 0.0008 | 0.94 | 0.14 | 0.001 | 0.0015 | 0.0015 | 0.0021 | 0.0014 | 0.0075 | Satisfied | Satisfied | Satisfied | Example |
| A13 | 0.0018 | 3.36 | 0.17 | 0.0015 | 0.1 | 0.03 | 0.0007 | 0.0022 | 0.0041 | 0.0031 | 0.0028 | 0.0094 | Satisfied | Satisfied | Satisfied | Example |
| A14 | 0.0024 | 3.4 | 1.18 | 0.0004 | 1.47 | 0.11 | 0.0007 | 0.0027 | 0.0013 | 0.0007 | 0.0004 | 0.0052 | Satisfied | Satisfied | Satisfied | Example |
| A15 | 0.0028 | 2.12 | 0.63 | 0.0012 | 0.27 | 0.01 | 0.001 | 0.0007 | 0.0015 | 0.0017 | 0.0014 | 0.0072 | Satisfied | Satisfied | Satisfied | Example |
| A16 | 0.0014 | 2.82 | 0.81 | 0.0002 | 0.83 | 0.11 | 0.0005 | 0.0015 | 0.0021 | 0.0015 | 0.0021 | 0.0035 | Satisfied | Satisfied | Satisfied | Example |
| A17 | 0.0017 | 3.07 | 0.35 | 0.0006 | 0.55 | 0.06 | 0.0007 | 0.001 | 0.0012 | 0.0005 | 0.0012 | 0.0066 | Satisfied | Satisfied | Satisfied | Example |
| A18 | 0.003 | 1.6 | 0.1 | 0.003 | 0.55 | 0.06 | 0.0007 | 0.001 | 0.0012 | 0.0005 | 0.003 | 0.01 | Satisfied | Satisfied | Satisfied | Example |

Note: in table 1, A represents whether to satisfy Nb/93 +V/51+Ti/48≤C/12+N/14, B represents whether to satisfy 33×O/16+S/32≤12×Ca/40, and C represents whether to satisfy Nb+V+Ti≤0.01%.

EP 4 001 448 A1

Table 2 lists specific technical parameters of the thin-gauge non-oriented electrical steel plate of Examples A8-A18 and the conventional steel plate of Comparative samples A1-A7.

Table 2.

| No. | Thickness of the hot-rolled steel plate / mm | Initial Temp. of the heating at the first rate /°C | First rate /°C/s | T Curie-Temp. /°C | K/°C²/s | T holding Temp. /°C | Holding time/s | Cold rolling reduction ratio/% | Initial Temp. of the heating at the second rate /°C | Second rate / °C/s | T crystallization-e nding /°C | T$_{soaking}$ /°C | Thickness of the finished steel plate /mm | Remark |
|---|---|---|---|---|---|---|---|---|---|---|---|---|---|---|
| A1 | **3.0** | 200 | 300 | 720 | 450 | 870 | 60 | **91.7** | 20 | 100 | 790 | 840 | 0.27 | Comparative example |
| A2 | 2.2 | / | / | 720 | / | / | / | 86.4 | 200 | 800 | 835 | 935 | 0.27 | Comparative example |
| A3 | 2.6 | 400 | 100 | 720 | 200 | 920 | 120 | **90.4** | 400 | 200 | 785 | 885 | 0.27 | Comparative example |
| A4 | 2.0 | / | / | 720 | / | / | / | **91.0** | 720 | 400 | 870 | 950 | 0.27 | Comparative example |
| A5 | 2.2 | 300 | 200 | 720 | 400 | 920 | 120 | 86.4 | / | / | 760 | **935** | 0.27 | Comparative example |
| A6 | 2.6 | 20 | 200 | 720 | 200 | 820 | 180 | **90.4** | 20 | 600 | 825 | 905 | 0.27 | Comparative example |
| A7 | 2.0 | 250 | 400 | 720 | 200 | 770 | 10 | 92.5 | 250 | 400 | 810 | **990** | 0.27 | Comparative example |
| A8 | 2.0 | 20 | 400 | 720 | 450 | 833 | 60 | 87.5 | 400 | 400 | 800 | 920 | 0.27 | Example |
| A9 | 1.6 | 200 | 2000 | 720 | 450 | 743 | 180 | 87.5 | 20 | 600 | 820 | 880 | 0.27 | Example |
| A10 | 1.8 | 350 | 200 | 720 | 400 | 920 | 120 | 83.3 | 300 | 450 | 780 | 880 | 0.27 | Example |
| A11 | 1.6 | 550 | 100 | 720 | 200 | 920 | 100 | 84.4 | 500 | 350 | 820 | 900 | 0.27 | Example |
| A12 | 1.6 | 250 | 300 | 720 | 300 | 820 | 150 | 84.4 | 600 | 200 | 835 | 935 | 0.27 | Example |
| A13 | 0.8 | 450 | 200 | 720 | 300 | 870 | 30 | 81.3 | 720 | 100 | 850 | 980 | 0.27 | Example |
| A14 | 1.2 | 600 | 300 | 720 | 450 | 870 | 90 | 75 | 500 | 350 | 870 | 990 | 0.30 | Example |
| A15 | 2.0 | 250 | 400 | 720 | 300 | 795 | 60 | 87.5 | 200 | 300 | 810 | 910 | 0.27 | Example |
| A16 | 1.2 | 100 | 100 | 720 | 200 | 920 | 1 | 90.0 | 200 | 5000 | 825 | 935 | 0.30 | Example |
| A17 | 1.8 | 20 | 50 | 720 | 100 | 920 | 20 | 88.9 | 350 | 400 | 825 | 935 | 0.27 | Example |

(continued)

| No. | Thickness of the hot-rolled steel plate / mm | Initial Temp. of the heating at the first rate /°C | First rate /°C/s | T Curie-Temp. /°C | $K$/°C²/s | T holding Temp. /°C | Holding time/s | Cold rolling reduction ratio/% | Initial Temp. of the heating at the second rate /°C | Second rate /°C/s | T crystallization ending /°C | $T_{soaking}$ /°C | Thickness of the finished steel plate /mm | Remark |
|---|---|---|---|---|---|---|---|---|---|---|---|---|---|---|
| A18 | 0.6 | 20 | 50 | 720 | 100 | 920 | 20 | 83.3 | 350 | 400 | 825 | 935 | 0.10 | Example |

Table 3 lists all performance parameters of the thin-gauge non-oriented electrical steel plate of Examples A8-A18 and the conventional steel plate of Comparative samples A1-A7.

Table 3.

| No. | Iron loss $P_{10/400}$ /W/kg | Magnetic induction $B_{50}$ /T | Remark |
| --- | --- | --- | --- |
| A1 | 13.7 | 1.63 | Comparative example |
| A2 | 12.8 | 1.65 | Comparative example |
| A3 | 14.2 | 1.62 | Comparative example |
| A4 | 13.4 | 1.64 | Comparative example |
| A5 | 12.9 | 1.61 | Comparative example |
| A6 | 13.5 | 1.64 | Comparative example |
| A7 | 12.2 | 1.62 | Comparative example |
| A8 | 10.9 | 1.70 | Example |
| A9 | 11.2 | 1.70 | Example |
| A10 | 11.2 | 1.71 | Example |
| A11 | 10.6 | 1.69 | Example |
| A12 | 11.5 | 1.70 | Example |
| A13 | 10.6 | 1.71 | Example |
| A14 | 11.2 | 1.69 | Example |
| A15 | 10.9 | 1.71 | Example |
| A16 | 10.8 | 1.71 | Example |
| A17 | 10.5 | 1.69 | Example |
| A18 | 10.3 | 1.69 | Example |

According to Table 1 and Table 3, the thin-gauge non-oriented electrical steel plate of all Examples of the present invention is excellent in magnetic property having an iron loss $P_{10/400}$ of $\leq 12$ W/kg, and a magnetic induction $B_{50}$ of $\geq 1.68$ T.

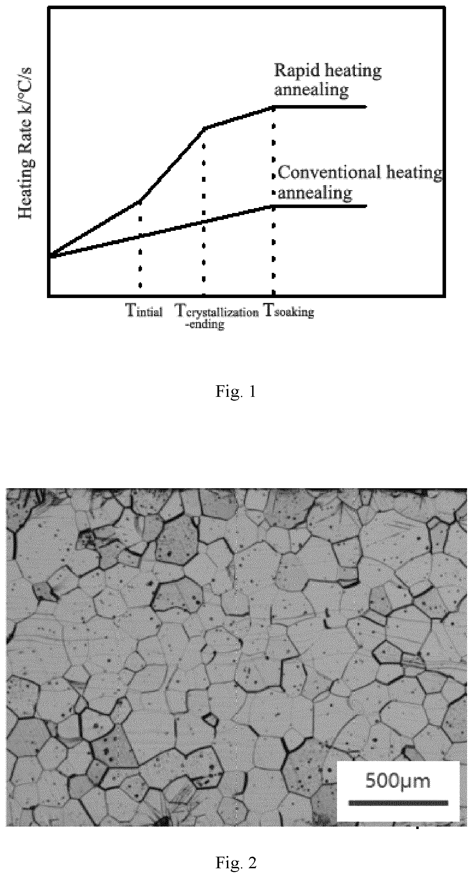

Fig. 1 is a schematic process diagram showing different annealing process adopted.

As shown in Fig. 1, because the manufacturing method adopted by the present invention adopts rapid heating annealing, it is different from the conventional heating annealing process. In order to achieve reduction of equipment investment, improvement of production efficiency and reduction of energy medium consumption, the present invention does not set normalizing treatment between hot rolling and cold rolling, but utilizes an intermediate annealing process to perform rapid and short-time heating and heat holding treatment on the hot-rolled steel plate, and the heating method may adopt, for example, ohmic heating or electromagnetic induction heating. When heating is performed at the first rate, the higher the heating rate is, the more favorable to inhibiting growth of harmful {111} surface texture and promoting morphology control of equiaxial crystal ratio, and the more favorable to electromagnetic property of the finished steel plate. However, if the heating rate is too high, the requirements for equipment performance and equipment investment would also become high. Therefore, in some preferred embodiments, the first rate can be controlled to be 50-400°C/s. Furthermore, the holding time of the first rate may be controlled to be 1-180 s, which has been greatly reduced comparing to the normalizing soaking time of the conventional heating annealing process. Meanwhile, the holding temperature is controlled at: $T_{holding\ Temp.} = T_{Curie\text{-}Temp.} + 100\ k/v$, wherein v is the first rate and k is the recrystallization effectiveness index of the hot-rolled steel plate assigned depending on the design of the chemical component in the steel and the first rate. Typically, the higher the contents of the chemical components Si, Mn, and Al and the larger the first rate, the larger the k value would be, wherein k is ranged from 100-450°C$^2$/s.

Whereas in the subsequent continuous annealing process, ohmic heating or electromagnetic induction heating may also be adopted for heating. Heating is performed from the rapid heating initial temperature $T_{initial}$ to the crystallization end temperature $T_{crystallization\text{-}ending}$ so as to further control release of stored energy and proportion of different kinds of surface textures in the cold-rolled steel plate. The rapid heating process lasts until recrystallization of the cold-rolled steel plate ends, because at this time, nucleation would be sufficient and contains no fibrous structure. Then, a conventional heating rate (for example, a heating rate of 1-30°C/s), or a rapid heating (for example, a heating rate of 100-5000°C/s) is further adopted to heat the cold-rolled steel plate into $T_{soaking}$ to perform soaking and holding, resulting in sufficient growth of the grain size, thereby obtaining excellent magnetic property. Here, whether to adopt rapid heating annealing is mainly considered from the viewpoint of manufacturing cost. Although it is helpful to the production efficiency and the electromagnetic property, it is not a restrictive requirement. The second rate is 100-5000°C/s, this is because: if the second rate is too slow, release of the stored energy of deformation during cold rolling would be fast, which is detrimental to controlling of the subsequent favorable structure; or if the second rate is too high, it would result in high requirement for the equipment performance and high cost, and further prolongs the holding time of the cold-rolled steel plate at high temperature stage, which leads to poor uniformity of the grain structure.

The thin-gauge non-oriented electrical steel plate obtained by adopting the manufacturing method of the present invention has an iron loss $P_{10/400}$ of $\leq$12 W/kg, and a magnetic induction $B_{50}$ of$\geq$1.68 T.

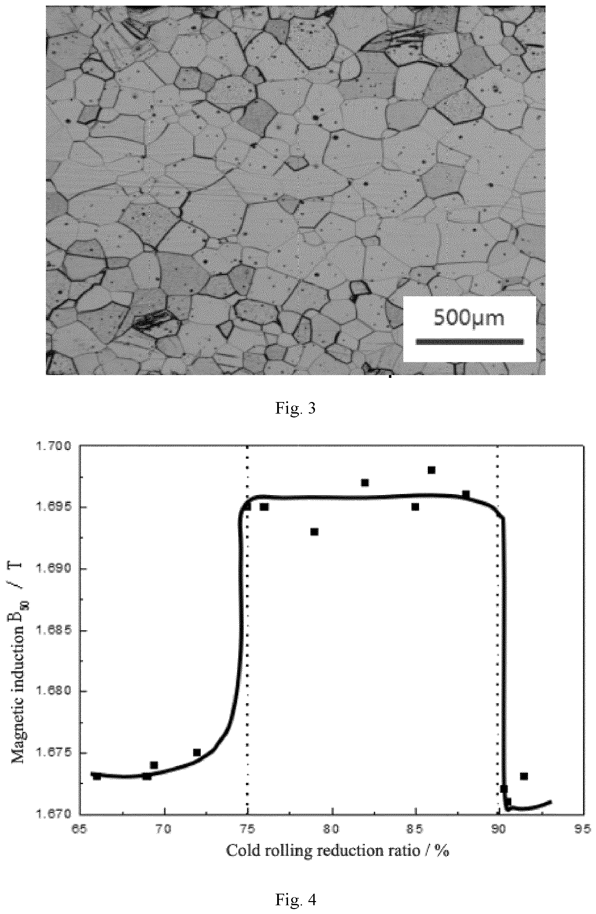

Fig. 2 is a scanning electron microscope (SEM) image of the thin-gauge non-oriented electrical steel plate of Example A9. Fig. 3 is a scanning electron microscope (SEM) image of the conventional steel plate of Comparative example A2.

It can be seen from Fig. 2 that the S grains of the thin-gauge non-oriented electrical steel plate of Example A9 are regular in shape, uniform in size and moderate in distribution. On the contrary, the conventional steel plate of the Comparative example A2 in Fig. 3 has fine grains, and the grains are irregular in shape and large in size and have a segregation phenomenon.

Fig. 4 schematically shows influence of different cold rolling reduction ratios on the magnetic induction.

As shown in Fig. 4, when the cold rolling reduction ratio is controlled to be 75%-90%, the thin-gauge non-oriented electrical steel plate with the magnetic induction $B_{50}$ of $\geq$1.68 T and the excellent magnetic property can be obtained, this is because: when the cold rolling reduction ratio is controlled to be 75%-90%, crystal recovery can be effectively inhibited in the subsequent continuous annealing process and can increase residual stored energy of deformation before recrystallization, thus the nucleation driving force is increased and reducing the intensity of the components of the <111>//ND recrystallization texture, thereby facilitating improvement and enhancement of the electromagnetic property, and finally obtain the thin-gauge non-oriented electrical steel plate.

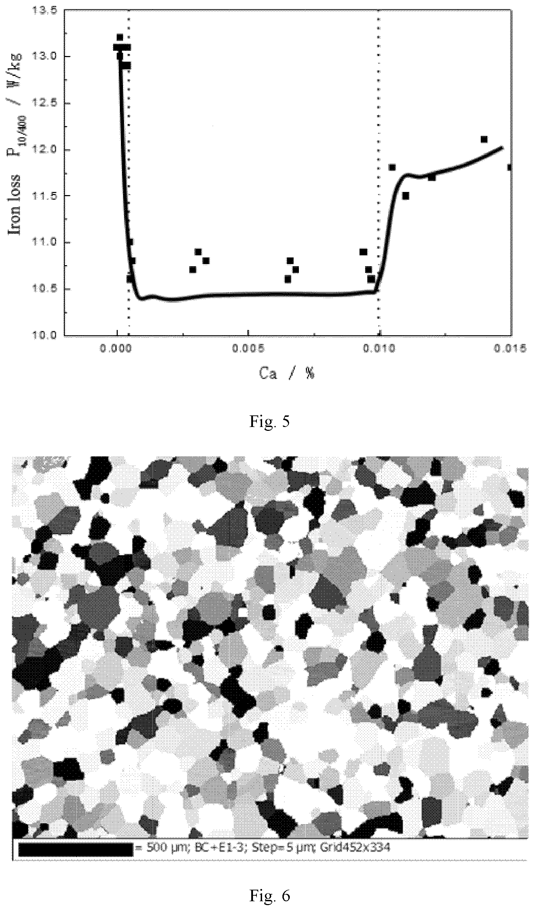

Fig. 5 schematically shows influence of different mass percentages of Ca on the iron loss.

As shown in Fig. 5, when the mass percentage of Ca is lower than 0.0005%, effects of removing oxide and sulfide inclusions cannot be achieved, whereas when the mass percentage of Ca is higher than 0.01%, grain refinement would easily occur, which leads to reduction of the rollability for cold rolling. On this basis, the mass percentage of Ca is controlled to be 0.0005-0.01 %, so as to obtain the thin-gauge non-oriented electrical steel plate with the iron loss $P_{10/400}$ of $\leq$12 W/kg.

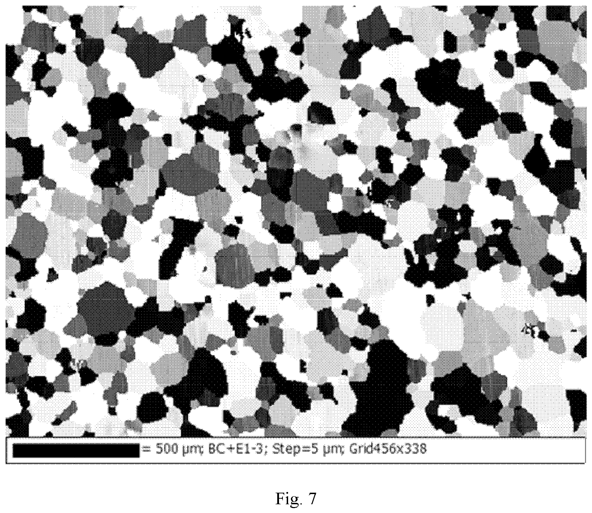

Fig. 6 is a texture figure of the thin-gauge non-oriented electrical steel plate of Example A15. Fig. 7 is a texture figure of the conventional steel plate of the Comparative example A3.

According to Fig. 6 and Fig. 7, it can be seen that the proportion of the {100} surface texture of the thin-gauge non-oriented electrical steel plate according to Example A15 is not lower than 15% comparing to the Comparative example A3.

In conclusion, it can be seen from the above that the thin-gauge non-oriented electrical steel plate according to the present invention has the characteristic of excellent magnetic property, and has an iron loss of $P_{10/400}\leq$12 W/kg, and a magnetic induction $B_{50}$ of $\geq$1.68 T.

In addition, the manufacturing method according to the present invention also has the above advantages and beneficial effects.

It should be noted that the portion of prior art in the protection scope of the present invention is not limited to the examples given herein. All prior art that does not contradict the solutions of the present invention, including but not limited to the previous patent documents, prior publications, prior applications, etc., can all be included in the protection scope of the present invention.

In addition, the combination of the technical features in the present disclosure is not limited to the combination described in the claims or the combination described in the specific examples. All technical features described herein can be freely combined in any way, unless contradicts between each other.

It should also be noted that the above-listed examples are only specific examples of the present invention. Obviously, the present invention should not be unduly limited to such specific examples. Changes or modifications that can be directly or easily derived from the present disclosure by those skilled in the art are intended to be within the protection scope of the present invention.

**Claims**

1. A non-oriented electrical steel plate, comprising the following chemical elements in percentage by mass:

0<C≤0.003%; Si: 1.6-3.4%; Mn: 0.1-1.2%; S≤0.003%; Al: 0.1-3.0%; Sn: 0.005-0.2%; Ca: 0.0005-0.01%; O≤0.003%; N≤0.003%; and the balance being Fe and inevitable impurities.

2. The non-oriented electrical steel plate of claim 1, **characterized in that**, the chemical elements of the non-oriented electrical steel plate further satisfy: $33 \times O/16 + S/32 \leq 12 \times Ca/40$.

3. The non-oriented electrical steel plate of claim 1, **characterized in that**, the non-oriented electrical steel plate further contains at least one of Nb, V or Ti elements, and the mass percentage of the Nb, V or Ti elements satisfies:

$$Nb/93 + V/51 + Ti/48 \leq C/12 + N/14;$$

and

$$Nb + V + Ti \leq 0.01\%.$$

4. The non-oriented electrical steel plate of claim 1, **characterized in that**, the non-oriented electrical steel plate has a thickness of 0.1-0.3 mm.

5. The non-oriented electrical steel plate of claim 1, **characterized in that**, the non-oriented electrical steel plate has a {100} plane texture in a proportion of not lower than 15%.

6. The non-oriented electrical steel plate of claim 1, **characterized in that**, the non-oriented electrical steel plate has an iron loss $P_{10/400}$ of ≤12 W/kg, and a magnetic induction $B_{50}$ of ≥1.68 T.

7. A manufacturing method for the non-oriented electrical steel plate of any one of claims 1-6, **characterized in that**, comprising steps of:

   smelting and casting;
   hot rolling;
   intermediate annealing: rapidly heating a hot-rolled steel plate to $T_{holding\ Temp.}$ at a first rate of 50-2000°C/s and holding for 1-180 s; $T_{holding\ Temp} = T_{Curie-Temp.} + 100\ k/v$, wherein v is the first rate with a unit of °C/s and k is a recrystallization effectiveness index of the hot-rolled strip steel plate ranging from 100-450°$C^2$/s with a unit of °$C^2$/s;
   cold rolling;
   continuous annealing: heating a cold-rolled steel plate from a rapid heating initial temperature $T_{initial}$ to a crystallization ending temperature $T_{crystallization-ending}$ at a second rate; then further heating the cold-rolled steel plate to a soaking temperature $T_{soaking}$ for soaking and holding, wherein the second rate is 100-5000°C/s;
   applying an insulation coating to obtain a finished non-oriented electrical steel plate.

8. The manufacturing method of claim 7, **characterized in that**, in the intermediate annealing step, the first rate is 50-400 °C/s.

9. The manufacturing method of claim 7, **characterized in that**, in the continuous annealing step, the second rate is 100-600 °C/s.

10. The manufacturing method of claim 7, **characterized in that**, in the continuous annealing step, the rapid heating initial temperature $T_{initial}$ is a temperature from room temperature to Curie temperature.

11. The manufacturing method of claim 7, **characterized in that**, in the continuous annealing step, the cold-rolled steel plate is further heated to the soaking temperature $T_{soaking}$ at a rate of 1-30 °C/s.

12. The manufacturing method of claim 7, **characterized in that**, $T_{soaking} = T_{crystallization-ending} + (50-130)$ °C.

13. The manufacturing method of claim 7, **characterized in that**, the steel plate after subjecting to the hot rolling step has a thickness of 0.8-2.0 mm.

**14.** The manufacturing method of claim 7, **characterized in that**, in the cold rolling step, primary cold rolling is adopted to roll the steel plate to a finished product thickness.

Fig. 1

Fig. 2

Fig. 3

Fig. 4

Fig. 5

Fig. 6

Fig. 7

## INTERNATIONAL SEARCH REPORT

International application No.

**PCT/CN2020/111403**

**A.    CLASSIFICATION OF SUBJECT MATTER**

C22C 38/00(2006.01)i;  C21D 8/12(2006.01)i

According to International Patent Classification (IPC) or to both national classification and IPC

**B.    FIELDS SEARCHED**

Minimum documentation searched (classification system followed by classification symbols)

C22C 38,  C21D

Documentation searched other than minimum documentation to the extent that such documents are included in the fields searched

Electronic data base consulted during the international search (name of data base and, where practicable, search terms used)

DWPI, SIPOABS, CN-PAT, CNKI: 无取向, 钙, 锡, 轧, 退火, non orient+, Ca, calcium, Sn, tin, stannum, roll+, anneal+

**C.    DOCUMENTS CONSIDERED TO BE RELEVANT**

| Category* | Citation of document, with indication, where appropriate, of the relevant passages | Relevant to claim No. |
|---|---|---|
| Y | JP 2015206092 A (JFE STEEL CORP.) 19 November 2015 (2015-11-19) description, paragraphs 0027, 0041-0042, embodiment 15 | 1-14 |
| Y | CN 108368561 A (JFE STEEL CORPORATION) 03 August 2018 (2018-08-03) description, paragraphs 0039, 0040, 0060, 0072-0077 | 1-14 |
| A | CN 103305659 A (BAOSHAN IRON AND STEEL CO., LTD.) 18 September 2013 (2013-09-18) entire document | 1-14 |
| A | CN 107541582 A (SHANGHAI MEISHAN IRON & STEEL CO., LTD.) 05 January 2018 (2018-01-05) entire document | 1-14 |
| A | WO 2019132426 A1 (POSCO) 04 July 2019 (2019-07-04) entire document | 1-14 |
| A | JP S5974257 A (KAWASAKI STEEL CORPORATION) 26 April 1984 (1984-04-26) entire document | 1-14 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 November 2020** | **25 November 2020** |

| Name and mailing address of the ISA/CN | Authorized officer |
|---|---|
| **China National Intellectual Property Administration (ISA/ CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2020/111403**

| Patent document cited in search report | | | Publication date (day/month/year) | Patent family member(s) | | | Publication date (day/month/year) |
|---|---|---|---|---|---|---|---|
| JP | 2015206092 | A | 19 November 2015 | JP | 6176181 | B2 | 09 August 2017 |
| CN | 108368561 | A | 03 August 2018 | KR | 102120572 | B1 | 08 June 2020 |
| | | | | BR | 112018010370 | A2 | 04 December 2018 |
| | | | | EP | 3388537 | A4 | 05 December 2018 |
| | | | | CN | 108368561 | B | 17 July 2020 |
| | | | | MX | 2018006883 | A | 06 September 2018 |
| | | | | RU | 2692138 | C1 | 21 June 2019 |
| | | | | WO | 2017098800 | A1 | 15 June 2017 |
| | | | | JP | 2017106073 | A | 15 June 2017 |
| | | | | EP | 3388537 | A1 | 17 October 2018 |
| | | | | TW | I605128 | B | 11 November 2017 |
| | | | | US | 2018355454 | A1 | 13 December 2018 |
| | | | | TW | 201720935 | A | 16 June 2017 |
| | | | | KR | 20180078306 | A | 09 July 2018 |
| | | | | CA | 3006620 | A1 | 15 June 2017 |
| | | | | EP | 3388537 | B1 | 01 January 2020 |
| | | | | JP | 6406522 | B2 | 17 October 2018 |
| CN | 103305659 | A | 18 September 2013 | RU | 2014132735 | A | 27 April 2016 |
| | | | | KR | 101613502 | B1 | 20 April 2016 |
| | | | | CN | 103305659 | B | 30 March 2016 |
| | | | | US | 2015034212 | A1 | 05 February 2015 |
| | | | | EP | 2824192 | B1 | 31 October 2018 |
| | | | | US | 10147528 | B2 | 04 December 2018 |
| | | | | KR | 20140115365 | A | 30 September 2014 |
| | | | | JP | 5832675 | B2 | 16 December 2015 |
| | | | | EP | 2824192 | B9 | 13 March 2019 |
| | | | | EP | 2824192 | A4 | 30 September 2015 |
| | | | | MX | 365600 | B | 07 June 2019 |
| | | | | WO | 2013131213 | A1 | 12 September 2013 |
| | | | | IN | 1788MUN2014 | A | 03 July 2015 |
| | | | | JP | 2015515541 | A | 28 May 2015 |
| | | | | MX | 2014010513 | A | 14 October 2014 |
| | | | | RU | 2590740 | C2 | 10 July 2016 |
| | | | | EP | 2824192 | A1 | 14 January 2015 |
| CN | 107541582 | A | 05 January 2018 | CN | 107541582 | B | 19 July 2019 |
| WO | 2019132426 | A1 | 04 July 2019 | KR | 20190078345 | A | 04 July 2019 |
| | | | | KR | 102043525 | B1 | 12 November 2019 |
| JP | S5974257 | A | 26 April 1984 | | None | | |

Form PCT/ISA/210 (patent family annex) (January 2015)

**REFERENCES CITED IN THE DESCRIPTION**

**Patent documents cited in the description**

- JP H1161257 B
- CN 1326009 A
- CN 101821418 A